(19) Europäisches Patentamt
European Patent Office
Office européen des brevets

(11) **EP 4 369 674 A1**

(12) **EUROPEAN PATENT APPLICATION**

(43) Date of publication:
**15.05.2024 Bulletin 2024/20**

(21) Application number: **22206456.0**

(22) Date of filing: **09.11.2022**

(51) International Patent Classification (IPC):
*H04L 41/0631* (2022.01)    *H04L 41/14* (2022.01)
*H04L 41/16* (2022.01)

(52) Cooperative Patent Classification (CPC):
**H04L 41/0631; H04L 41/14; H04L 41/16**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Nokia Solutions and Networks Oy
02610 Espoo (FI)**

(72) Inventors:
• **BOUZID, Makram
91400 Orsay (FR)**
• **AGHASARYAN, Armen
91600 Savigny sur Orge (FR)**
• **FILIPE ROCHA, Ricardo
3800-880 Requeixo (PT)**

(74) Representative: **Loyer & Abello
9, rue Anatole de la Forge
75017 Paris (FR)**

(54) **METHOD AND APPARATUS FOR ANOMALY DETECTION**

(57)    An apparatus for anomaly detection (20), the apparatus comprising means for:
- Collecting a measurement time-series (14) relating to a performance indicator of a communication network resource,
- Computing a representative vector of said measurement time-series (14),
- Providing a clustering model comprising a set of clusters, wherein the clustering model has been trained on a plurality of training time-series, wherein a cluster of the set of clusters comprises partial time-series that meet a similarity condition, wherein a cluster anomaly label is associated with said cluster,
- Selecting a subset of the set of clusters, wherein the subset comprises at least one cluster for which the partial time-series within the cluster meet a distance condition with the representative vector,
- Associating an anomaly label (30) with the measurement time-series, wherein the anomaly label is computed as a function of the cluster anomaly label.

FIG. 2

Processed by Luminess, 75001 PARIS (FR)

## Description

## Field

The disclosure relates to apparatuses and methods for processing time series, in particular in the context of anomaly detection.

## Background

Anomaly detection in time series is a set of techniques aimed at finding outliers or rare events in data varying with time. Supervised approaches, such as neural networks, or unsupervised approaches, such as clustering, may be used.

In telecommunications, whether a pattern in a time series is anomalous is often highly dependent on several parameters, such as a temporal or topological context. Existing solutions for anomaly detection in complex systems often rely on human experts, which is costlier and more difficult. The existing solutions are also confronted with high rates of false positives.

Thus, there is a need for apparatuses and techniques to detect anomalies in time series without the need of a human expert and with limited false positive rates.

## Summary

In some embodiments, the disclosure provides an apparatus for anomaly detection. The apparatus comprises means for:

Collecting a measurement time-series relating to a performance indicator, wherein the measurement time-series relates to a communications network resource, wherein the measurement time-series is collected over a predetermined timeframe,

- Computing a representative value of said measurement time-series,
- Providing a clustering model comprising a set of clusters, wherein the clustering model has been trained on a plurality of training time-series relating to the performance indicator, wherein the training time-series relate to a plurality of communications network resources, wherein a cluster of the set of clusters comprises partial time-series that meet an internal similarity condition, wherein the partial time-series are portions of the training time-series, wherein a cluster anomaly label is associated with said cluster, wherein the cluster anomaly label encodes whether the cluster is anomalous,
- Selecting a cluster subset within the set of clusters, wherein the cluster subset is associated with the measurement time-series, wherein the cluster subset comprises at least one cluster which meets an external similarity condition with the measurement time-series, wherein the external similarity condition is a function of a first distance between the partial time-series within the cluster and the representative value of the measurement time-series,

- Computing a primary anomaly label associated with the measurement time-series, wherein the primary anomaly label is computed as a function of the cluster anomaly label of the at least one cluster of the cluster subset associated with the measurement time-series.

Thanks to these features, anomalies in time-series may be detected in an unsupervised fashion, which is more cost-effective than supervised learning and may result in the detection of more complex anomalies.

The apparatus for anomaly detection may comprise one or more of the following features.

In an embodiment, the apparatus further comprises means for:

- Collecting a plurality of measurement time-series relating to a plurality of performance indicators, wherein the plurality of measurement time-series relates to the communications network resource, wherein the plurality of measurement time-series is collected over the predetermined timeframe,
- Computing a respective representative value associated with each of said measurement time-series,
- Selecting within the set of clusters a cluster subset associated with each of said measurement time-series, wherein the cluster subset comprises at least one cluster for which the partial time-series within the cluster meet a distance condition with the representative value associated with the measurement time-series,
- Computing a primary anomaly label associated with each of said measurement time-series, wherein the primary anomaly label is computed as a function of the cluster anomaly label of the at least one cluster of the cluster subset associated with the measurement time-series,
- Computing a secondary anomaly label associated with at least one of the plurality of measurement time-series, wherein the secondary anomaly label is computed as a function of the primary anomaly labels associated with the plurality of measurement time series.

Thanks to these features, a false positive in the primary anomaly label may be detected and the secondary anomaly label may correct the false positive.

In an embodiment, the apparatus further comprises means for:

- Computing a decision weight associated to each of the at least one cluster of the cluster subset associated with the measurement time-series, wherein the decision weight depends on a similarity parameter representing similarity between the representative vector associated with the measurement time-series and the at least one cluster of the cluster subset, and on a size of the at least one cluster, wherein the size of the cluster is a number of partial time-series in the cluster,
- Computing the primary anomaly label as a function of the decision weight and the cluster anomaly label of the at least one cluster of the cluster subset associated with the measurement time-series.

Thanks to these features, the primary anomaly label is influenced by the cluster anomaly labels of clusters which satisfy a proximity condition and a size condition.

In an embodiment, the apparatus further comprises means for transmitting the primary anomaly label to a correction module, wherein the correction module performs root cause analysis and at least one corrective action relating to the communications network resource.

Thanks to these features, a detected anomaly may be further analyzed and corrected.

In an embodiment, a temporal attribute is associated with said or each of said measurement time-series, wherein each cluster comprises a cluster temporal attribute, and wherein the external similarity condition is a function of a second distance between the cluster temporal attribute and the temporal attribute associated with the measurement time-series.

Thanks to the use of temporal attributes, some anomalies linked to patterns happening periodically (on week-ends or on nights) may be detected.

In an embodiment, the representative value is a median value of said or each of said measurement time-series.

In an embodiment, the apparatus further comprises means for:

- Collecting a plurality of measurement time-series relating to a plurality of communications network resources and feature vectors associated with the plurality of communications network resources, wherein the feature vectors encode physical features of the plurality of communications network resources,
- Selecting a time-series subset within the plurality of measurement time-series as a function of the feature vectors, wherein the feature vectors associated to the measurement time-series within the time-series subset meet a similarity criterion,
- Computing representative values associated with each measurement time-series of the time-series subset,
- Selecting within the set of clusters a cluster subset associated with each measurement time-series of the time-series subset, wherein the cluster subset comprises at least one cluster which meets the external similarity condition with the measurement time-series,
- Computing a primary anomaly label associated with each measurement time-series of the time-series subset, wherein the primary anomaly label is computed as a function of the cluster anomaly label of the at least one cluster of the cluster subset associated with the measurement time-series,
- Computing a secondary anomaly label associated with at least one measurement time-series of the time-series subset, wherein the secondary anomaly label is computed as a function of the primary anomaly labels associated with the measurement time series of the time-series subset.

Thanks to the feature vectors, the primary anomaly label may be computed using data extracted from communications network resources having similar behaviours.

In an embodiment, said similarity criterion consists in that the feature vectors associated to the measurement time-series within the time-series subset are identical.

In an embodiment, the means for providing a clustering model are configured for:

- Providing a training array comprising the plurality of training time-series within the time-series subset as columns of the training array and simultaneous values of the training time-series within the time-series subset as lines of the training array, wherein a timestamp is associated to each line of the training array,
- Clustering the lines of the training array into at least one subarray, wherein the subarray comprises lines of the training array which meet a first vector similarity condition, wherein the subarray comprises a partial column corresponding to each column of the training array,
- Clustering the partial columns of the subarray into said set of clusters, wherein each cluster of the set of clusters comprises partial columns of the subarray that meet a second vector similarity condition,
- Associating the cluster anomaly labels with the set of clusters.

Thanks to these features, the clusters may be computed in an unsupervised fashion and each cluster may regroup similar extracts of time-series from the plurality of time-series.

In an embodiment, the apparatus further comprises means for setting the cluster anomaly label associated with a cluster to encode an anomalous cluster in response to determining that a size of the cluster is lower than a threshold of size.

Thanks to these features, larger clusters may be associated with a normal behaviour and smaller clusters may be associated with an anomalous behaviour.

In an embodiment, the apparatus further comprises means for setting the threshold of size as a function of a size distribution of the set of clusters.

Thanks to these features, the threshold of size may be computed automatically.

In some example embodiments, the disclosure also provides a method for anomaly detection, the method comprising the steps of:

- Collecting a measurement time-series relating to a performance indicator, wherein the measurement time-series relates to a communications network resource, wherein the measurement time-series is collected over a predetermined timeframe,
- Computing a representative value of said measurement time-series,
- Providing a clustering model comprising a set of clusters, wherein the clustering model has been trained on a plurality of training time-series relating to the performance indicator, wherein the training time-series relate to a plurality of communications network resources, wherein a cluster of the set of clusters comprises partial time-series that meet an internal similarity condition, wherein the partial time-series are portions of the training time-series, wherein a cluster anomaly label is associated with said cluster, wherein the cluster anomaly label encodes whether the cluster is anomalous,
- Selecting a cluster subset within the set of clusters, wherein the cluster subset is associated with the measurement time-series, wherein the cluster subset comprises at least one cluster which meets an external similarity condition with the measurement time-series, wherein the external similarity condition is a function of a first distance between the partial time-series within the cluster and the representative value of the measurement time-series,
- Computing a primary anomaly label associated with the measurement time-series, wherein the primary anomaly label is computed as a function of the cluster anomaly label of the at least one cluster of the cluster subset associated with the measurement time-series.

In an embodiment, the method further comprises the steps of:

- Collecting a plurality of measurement time-series relating to a plurality of performance indicators, wherein the plurality of measurement time-series relates to the communications network resource, wherein the plurality of measurement time-series is collected over the predetermined timeframe,
- Computing a respective representative value associated with each of said measurement time-series,
- Selecting within the set of clusters a cluster subset associated with each of said measurement time-series, wherein the cluster subset comprises at least one cluster for which the partial time-series within the cluster meet a distance condition with the representative value associated with the measurement time-series,
- Computing a primary anomaly label associated with each of said measurement time-series, wherein the primary anomaly label is computed as a function of the cluster anomaly label of the at least one cluster of the cluster subset associated with the measurement time-series,
- Computing a secondary anomaly label associated with at least one of the plurality of measurement time-series, wherein the secondary anomaly label is computed as a function of the primary anomaly labels associated with the plurality of measurement time series.

In an embodiment, the method further comprises the steps of:

- Computing a decision weight associated to each of the at least one cluster of the cluster subset associated with the measurement time-series, wherein the decision weight depends on a similarity parameter representing similarity between the representative vector associated with the measurement time-series and the at least one cluster of the cluster subset, and on a size of the at least one cluster, wherein the size of the cluster is a number of partial time-series in the cluster,
- Computing the primary anomaly label as a function of the decision weight and the cluster anomaly label of the at least one cluster of the cluster subset associated with the measurement time-series.

In an embodiment, the method further comprises the steps of transmitting the primary anomaly label to a correction module, wherein the correction module performs root cause analysis and at least one corrective action relating to the communications network resource.

In an embodiment, a temporal attribute is associated with said or each of said measurement time-series, wherein each cluster comprises a cluster temporal attribute, and wherein the external similarity condition is a function of a second distance between the cluster temporal attribute and the temporal attribute associated with the measurement time-series.

In an embodiment, the representative value is a median value of said or each of said measurement time-series.

In an embodiment, the method further comprises the steps of:

- Collecting a plurality of measurement time-series relating to a plurality of communications network resources and feature vectors associated with the plurality of communications network resources, wherein the feature vectors encode physical features of the plurality of communications network resources,
- Selecting a time-series subset within the plurality of measurement time-series as a function of the feature vectors, wherein the feature vectors associated to the measurement time-series within the time-series subset meet a similarity criterion,

- Computing representative values associated with each measurement time-series of the time-series subset,
- Selecting within the set of clusters a cluster subset associated with each measurement time-series of the time-series subset, wherein the cluster subset comprises at least one cluster which meets the external similarity condition with the measurement time-series,
- Computing a primary anomaly label associated with each measurement time-series of the time-series subset, wherein the primary anomaly label is computed as a function of the cluster anomaly label of the at least one cluster of the cluster subset associated with the measurement time-series,
- Computing a secondary anomaly label associated with at least one measurement time-series of the time-series subset, wherein the secondary anomaly label is computed as a function of the primary anomaly labels associated with the measurement time series of the time-series subset.

In an embodiment, said similarity criterion consists in that the feature vectors associated to the measurement time-series within the time-series subset are identical.

In an embodiment, the steps of providing a clustering model are configured for:

- Providing a training array comprising the plurality of training time-series within the time-series subset as columns of the training array and simultaneous values of the training time-series within the time-series subset as lines of the training array, wherein a timestamp is associated to each line of the training array,
- Clustering the lines of the training array into at least one subarray, wherein the subarray comprises lines of the training array which meet a first vector similarity condition, wherein the subarray comprises a partial column corresponding to each column of the training array,
- Clustering the partial columns of the subarray into said set of clusters, wherein each cluster of the set of clusters comprises partial columns of the subarray that meet a second vector similarity condition,
- Associating the cluster anomaly labels with the set of clusters.

In an embodiment, the method further comprises the steps of setting the cluster anomaly label associated with a cluster to encode an anomalous cluster in response to determining that a size of the cluster is lower than a threshold of size.

In an embodiment, the method further comprises the steps of setting the threshold of size as a function of a size distribution of the set of clusters.

In some embodiments, the invention provides a non-transitory computer readable medium comprising program instructions for causing an apparatus to perform the above method.

In some example embodiments, the means in the apparatus further comprises:

At least one processor; and
At least one memory including a computer program code, the at least one memory and computer program code configured to, with the at least one processor, cause the operations of the apparatus.

The at least one memory and the computer program code may be configured to, with the at least one processor, cause the apparatus to:
Collect a measurement time-series relating to a performance indicator, wherein the measurement time-series relates to a communications network resource, wherein the measurement time-series is collected over a predetermined timeframe,

- Compute a representative value of said measurement time-series,
- Provide a clustering model comprising a set of clusters, wherein the clustering model has been trained on a plurality of training time-series relating to the performance indicator, wherein the training time-series relate to a plurality of communications network resources, wherein a cluster of the set of clusters comprises partial time-series that meet an internal similarity condition, wherein the partial time-series are portions of the training time-series, wherein a cluster anomaly label is associated with said cluster, wherein the cluster anomaly label encodes whether the cluster is anomalous,
- Select a cluster subset within the set of clusters, wherein the cluster subset is associated with the measurement time-series, wherein the cluster subset comprises at least one cluster which meets an external similarity condition with the measurement time-series, wherein the external similarity condition is a function of a first distance between the partial time-series within the cluster and the representative value of the measurement time-series,
- Compute a primary anomaly label associated with the measurement time-series, wherein the primary anomaly label is computed as a function of the cluster anomaly label of the at least one cluster of the cluster subset associated with the measurement time-series.

The at least one memory and the computer program code may further be configured to, with the at least one processor, cause the apparatus to:

- Collect a plurality of measurement time-series relating to a plurality of performance indicators, wherein the plurality of measurement time-series relates to the communications network resource, wherein the plurality of measurement time-series is collected over the predetermined timeframe,

- Compute a respective representative value associated with each of said measurement time-series,
- Select within the set of clusters a cluster subset associated with each of said measurement time-series, wherein the cluster subset comprises at least one cluster for which the partial time-series within the cluster meet a distance condition with the representative value associated with the measurement time-series,
- Compute a primary anomaly label associated with each of said measurement time-series, wherein the primary anomaly label is computed as a function of the cluster anomaly label of the at least one cluster of the cluster subset associated with the measurement time-series,
- Compute a secondary anomaly label associated with at least one of the plurality of measurement time-series, wherein the secondary anomaly label is computed as a function of the primary anomaly labels associated with the plurality of measurement time series.

The at least one memory and the computer program code may further be configured to, with the at least one processor, cause the apparatus to:

- Compute a decision weight associated to each of the at least one cluster of the cluster subset associated with the measurement time-series, wherein the decision weight depends on a similarity parameter representing similarity between the representative vector associated with the measurement time-series and the at least one cluster of the cluster subset, and on a size of the at least one cluster, wherein the size of the cluster is a number of partial time-series in the cluster,
- Compute the primary anomaly label as a function of the decision weight and the cluster anomaly label of the at least one cluster of the cluster subset associated with the measurement time-series.

The at least one memory and the computer program code may further be configured to, with the at least one processor, cause the apparatus to transmit the primary anomaly label to a correction module, wherein the correction module performs root cause analysis and at least one corrective action relating to the communications network resource.

The at least one memory and the computer program code may further be configured to, with the at least one processor, cause the apparatus to:

- Collect a plurality of measurement time-series relating to a plurality of communications network resources and feature vectors associated with the plurality of communications network resources, wherein the feature vectors encode physical features of the plurality of communications network resources,

- Select a time-series subset within the plurality of measurement time-series as a function of the feature vectors, wherein the feature vectors associated to the measurement time-series within the time-series subset meet a similarity criterion,
- Compute representative values associated with each measurement time-series of the time-series subset,
- Select within the set of clusters a cluster subset associated with each measurement time-series of the time-series subset, wherein the cluster subset comprises at least one cluster which meets the external similarity condition with the measurement time-series,
- Compute a primary anomaly label associated with each measurement time-series of the time-series subset, wherein the primary anomaly label is computed as a function of the cluster anomaly label of the at least one cluster of the cluster subset associated with the measurement time-series,
- Compute a secondary anomaly label associated with at least one measurement time-series of the time-series subset, wherein the secondary anomaly label is computed as a function of the primary anomaly labels associated with the measurement time series of the time-series subset.

The at least one memory and the computer program code may further be configured to, with the at least one processor, cause the apparatus to:

- Provide a training array comprising the plurality of training time-series within the time-series subset as columns of the training array and simultaneous values of the training time-series within the time-series subset as lines of the training array, wherein a timestamp is associated to each line of the training array,
- Cluster the lines of the training array into at least one subarray, wherein the subarray comprises lines of the training array which meet a first vector similarity condition, wherein the subarray comprises a partial column corresponding to each column of the training array,
- Cluster the partial columns of the subarray into said set of clusters, wherein each cluster of the set of clusters comprises partial columns of the subarray that meet a second vector similarity condition,
- Associate the cluster anomaly labels with the set of clusters.

The at least one memory and the computer program code may further be configured to, with the at least one processor, cause the apparatus to set the cluster anomaly label associated with a cluster to encode an anomalous cluster in response to determining that a size of the cluster is lower than a threshold of size.

The at least one memory and the computer program code may further be configured to, with the at least one processor, cause the apparatus to set the threshold of size as a function of a size distribution of the set of clusters.

In some embodiments, the disclosure provides an apparatus comprising:

- A first collecting circuitry configured to collect a measurement time-series relating to a performance indicator, wherein the measurement time-series relates to a communications network resource, wherein the measurement time-series is collected over a predetermined timeframe,
- A first computing circuitry configured to compute a representative value of said measurement time-series,
- A first providing circuitry configured to provide a clustering model comprising a set of clusters, wherein the clustering model has been trained on a plurality of training time-series relating to the performance indicator, wherein the training time-series relate to a plurality of communications network resources, wherein a cluster of the set of clusters comprises partial time-series that meet an internal similarity condition, wherein the partial time-series are portions of the training time-series, wherein a cluster anomaly label is associated with said cluster, wherein the cluster anomaly label encodes whether the cluster is anomalous,
- A first selecting circuitry configured to select a cluster subset within the set of clusters, wherein the cluster subset is associated with the measurement time-series, wherein the cluster subset comprises at least one cluster which meets an external similarity condition with the measurement time-series, wherein the external similarity condition is a function of a first distance between the partial time-series within the cluster and the representative value of the measurement time-series,
- A second computing circuitry configured to compute a primary anomaly label associated with the measurement time-series, wherein the primary anomaly label is computed as a function of the cluster anomaly label of the at least one cluster of the cluster subset associated with the measurement time-series.

In an embodiment, the apparatus further comprises:

- A second collecting circuitry configured to collect a plurality of measurement time-series relating to a plurality of performance indicators, wherein the plurality of measurement time-series relates to the communications network resource, wherein the plurality of measurement time-series is collected over the predetermined timeframe,

- A third computing circuitry configured to compute a respective representative value associated with each of said measurement time-series,
- A second selecting circuitry configured to select within the set of clusters a cluster subset associated with each of said measurement time-series, wherein the cluster subset comprises at least one cluster for which the partial time-series within the cluster meet a distance condition with the representative value associated with the measurement time-series,
- A fourth computing circuitry configured to compute a primary anomaly label associated with each of said measurement time-series, wherein the primary anomaly label is computed as a function of the cluster anomaly label of the at least one cluster of the cluster subset associated with the measurement time-series,
- A fifth computing circuitry configured to compute a secondary anomaly label associated with at least one of the plurality of measurement time-series, wherein the secondary anomaly label is computed as a function of the primary anomaly labels associated with the plurality of measurement time series.

In an embodiment, the apparatus further comprises:

- A sixth computing circuitry configured to compute a decision weight associated to each of the at least one cluster of the cluster subset associated with the measurement time-series, wherein the decision weight depends on a similarity parameter representing similarity between the representative vector associated with the measurement time-series and the at least one cluster of the cluster subset, and on a size of the at least one cluster, wherein the size of the cluster is a number of partial time-series in the cluster,
- A seventh computing circuitry configured to compute the primary anomaly label as a function of the decision weight and the cluster anomaly label of the at least one cluster of the cluster subset associated with the measurement time-series.

In an embodiment, the apparatus further comprises means a transmitting circuitry configured to transmit the primary anomaly label to a correction module, wherein the correction module performs root cause analysis and at least one corrective action relating to the communications network resource.

In an embodiment, the apparatus further comprises:

- A third collecting circuitry configured to collect a plurality of measurement time-series relating to a plurality of communications network resources and feature vectors associated with the plurality of communications network resources, wherein the feature vectors encode physical features of the plurality of communications network resources,

- A third selecting circuitry configured to select a time-series subset within the plurality of measurement time-series as a function of the feature vectors, wherein the feature vectors associated to the measurement time-series within the time-series subset meet a similarity criterion,
- An eighth computing circuitry configured to compute representative values associated with each measurement time-series of the time-series subset,
- A fourth selecting circuitry configured to select within the set of clusters a cluster subset associated with each measurement time-series of the time-series subset, wherein the cluster subset comprises at least one cluster which meets the external similarity condition with the measurement time-series,
- A ninth computing circuitry configured to compute a primary anomaly label associated with each measurement time-series of the time-series subset, wherein the primary anomaly label is computed as a function of the cluster anomaly label of the at least one cluster of the cluster subset associated with the measurement time-series,
- A tenth computing circuitry configured to compute a secondary anomaly label associated with at least one measurement time-series of the time-series subset, wherein the secondary anomaly label is computed as a function of the primary anomaly labels associated with the measurement time series of the time-series subset.

In an embodiment, the means for providing a clustering model comprise:

- A second providing circuitry configured to provide a training array comprising the plurality of training time-series within the time-series subset as columns of the training array and simultaneous values of the training time-series within the time-series subset as lines of the training array, wherein a timestamp is associated to each line of the training array,
- A first clustering circuitry configured to cluster the lines of the training array into at least one subarray, wherein the subarray comprises lines of the training array which meet a first vector similarity condition, wherein the subarray comprises a partial column corresponding to each column of the training array,
- A second clustering circuitry configured to cluster the partial columns of the subarray into said set of clusters, wherein each cluster of the set of clusters comprises partial columns of the subarray that meet a second vector similarity condition,
- An associating circuitry configured to associate the cluster anomaly labels with the set of clusters.

In an embodiment, the apparatus further comprises a first setting circuitry configured to set the cluster anomaly label associated with a cluster to encode an anomalous cluster in response to determining that a size of the cluster is lower than a threshold of size.

In an embodiment, the apparatus further comprises a second setting circuitry configured to set the threshold of size as a function of a size distribution of the set of clusters.

## Brief description of the drawings

These and other aspects of the invention will be apparent from and elucidated with reference to example embodiments described hereinafter, by way of example, with reference to the drawings.

FIG. 1 represents a schematic view of an interaction between a plurality of network resources and a remote infrastructure comprising an anomaly detection module.

FIG. 2 represents a schematic view of the anomaly detection module within the remote infrastructure.

FIG. 3 represents a schematic view of modules within the anomaly detection module.

FIG. 4 represents a schematic view of a model-building module which outputs a clustering model used in the anomaly detection module.

FIG. 5 represents a schematic view of a contextual clustering unit in the model-building module.

FIG. 6 represents a schematic view of an interaction between the anomaly detection module and a corrective module.

FIG. 7 is a functional diagram of a programmed computer in which example embodiments of the invention may be implemented.

## Detailed description of the embodiments

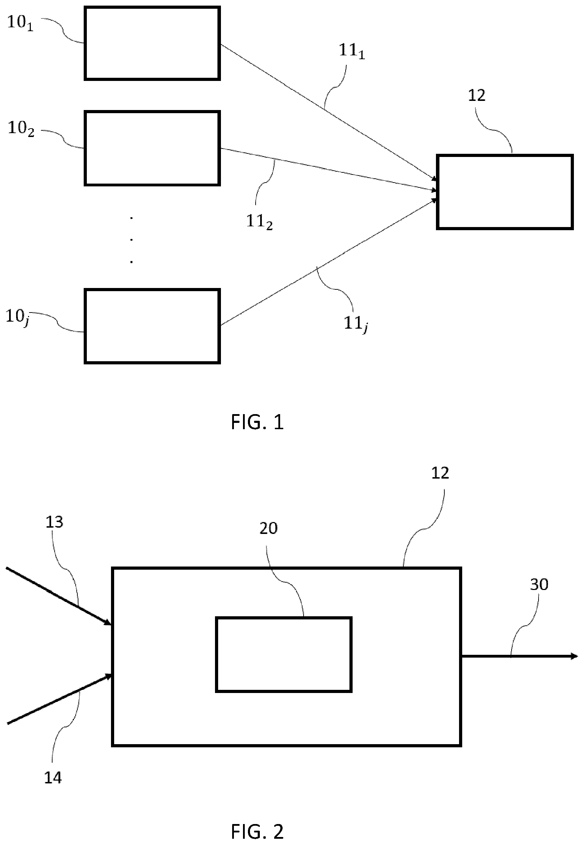

With reference to FIG. 1 and FIG. 2, communications network resources $10_1$, $10_2$,..., $10_j$ transmit streams of data $11_1$, $11_2$,..., $11_j$ to a remote infrastructure 12.

The communications network resources $10_1$, $10_2$,..., $10_j$ may comprise telecommunications network equipment such as Base Station Controllers, Base Station Control Functions, Base Station Transceiver Stations, Transceivers. The communications network resources $10_1$, $10_2$,..., $10_j$ may comprise physical or logical entities, on hardware or software.

The remote infrastructure 12 may be on premise or may be deployed in a cloud. The remote infrastructure 12 may receive several telemetry data streams and may contribute to monitor the communications network resources $10_1$, $10_2$,..., $10_j$. The remote infrastructure 12 comprises an anomaly detection module 20, which may be a software embedded in the remote infrastructure 12.

The anomaly detection module 20 may be configured to detect different types of anomalies pertaining to the communications network resources 101, $10_2$,...,

$10_j$. Examples of anomalies may comprise a low Call Setup Success rate in a rural zone or a high Drop Call rate during off-peak times.

A number of communications network resources monitored by the remote infrastructure may range up to millions. The communications network resources $10_1$, $10_2$,..., $10_j$ are associated with resource metadata 13, which comprise attributes relating to the physical features of the communications network resources and an environment of said communications network resources $10_1$, $10_2$,..., $10_j$.

The resource metadata 13 may include a resource type, a network slice type (e.g.: ultra-reliable low latency, enhanced mobile broadband, ...), a geographical area size category (e.g.: low, medium, high), a geographical area density type (e.g.: low, medium, high), a geographical area usage type (e.g.: industrial, commercial, residential, healthcare) or a local network topology.

The remote infrastructure 12 may have access to the resource metadata 13 of the communications network resources $10_1$, $10_2$,..., $10_j$.

The communications network resources $10_1$, $10_2$,..., $10_j$ measure values of a plurality of key performance indicators at regular intervals. A reporting period between two measures may range from a minute to more than a day.

The streams of data $11_1$, $11_2$,..., $11_j$ transmitted from the communications network resources $10_1$, $10_2$,..., $10_j$ to the remote infrastructure 12 comprise the values of the plurality of key performance indicators.

The key performance indicators are variables linked to performance, for example linked to network quality or service quality. The plurality of key performance indicators may comprise a network capacity, a network usage rate, a data rate, a throughput rate, a Call Setup Success rate or a Drop Call rate. The key performance indicators may be univariate or multivariate.

According to an embodiment, the plurality of key performance indicators may be measured and transmitted simultaneously. The reporting period is common to the plurality of key performance indicators.

The remote infrastructure 12 receives new measurements of the plurality of key performance indicators for the plurality of communications network resources $10_1$, $10_2$,..., $10_j$. The remote infrastructure 12 also stores past measurements of the plurality of key performance indicators for the plurality of communications network resources $10_1$, $10_2$,..., $10_j$. Thus, the remote infrastructure 12 may build measurement time-series for the plurality of key performance indicators and the plurality of communications network resources $10_1$, $10_2$,..., $10_j$.

With reference to FIG. 2, the anomaly detection module 20 receives the measurement time-series 14 and outputs anomaly labels 30 associated with the measurement time-series. A positive anomaly label encodes a presence of an anomalous behavior in a measurement time-series. A negative anomaly label encodes an absence of an anomalous behavior in the measurement time-series. The word "positive" (respectively "negative") does not imply that the anomaly label is encoded by a positive (respectively negative) number.

A length of the measurement time-series 14 is determined by a sliding window parameter. The sliding window parameter may range from a few minutes to a few months. Small values of the sliding window parameter may be used to detect punctual anomalies. Larger values of the sliding window parameter may be used to detect long-term changes in behavior or new patterns.

The sliding window parameter may take several values over time. Different values of the sliding window parameter may also be used in parallel to detect different kinds of anomalies at the same time.

The anomaly detection module 20 may also extract derived temporal attributes from timestamps associated with values from the measurement time-series 14. The derived temporal attributes may be Boolean variables (e.g.: a variable encoding whether the timestamps are associated with specific days of the week, for example the weekend) or categorical variables (e.g.: a variable encoding the day of the week or a variable encoding the time of the day, which may be categorized in blocks of several hours each).

The anomaly detection module 20 also has access to the resource metadata 13 associated with the communications network resources $10_1$, $10_2$,..., $10_j$. The anomaly label 30 of the measurement time-series 14 may depend on values of the resource metadata 13.

A clustering model is embedded within the anomaly detection module 20. The clustering model has been trained on a pre-existing dataset of training time-series. The training time-series are associated with the plurality of key performance indicators and the plurality of communications network resources $10_1$, $10_2$,..., $10_j$.

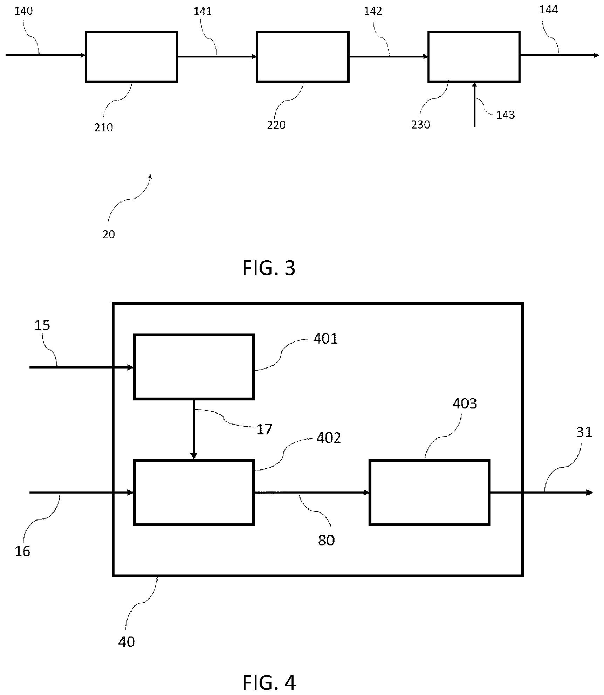

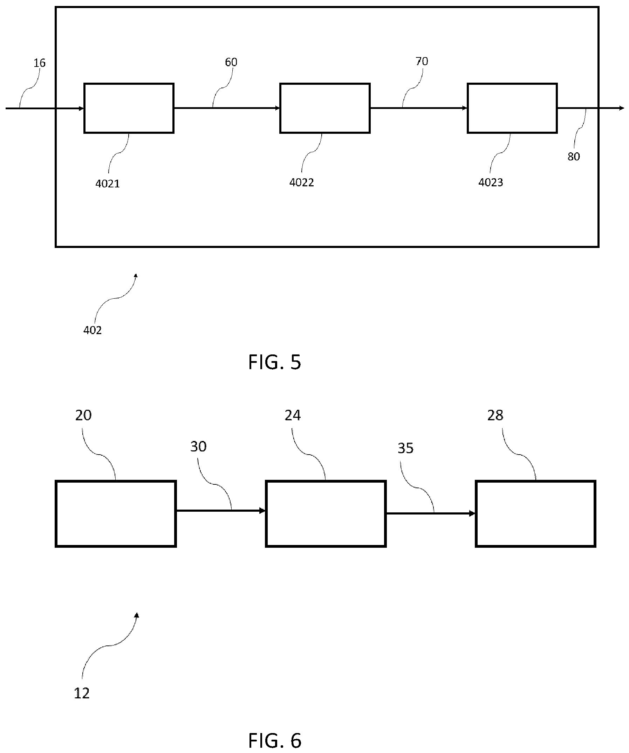

With reference to FIG. 4 and FIG. 5, the clustering model comprises a set of clusters 80, a cluster of the set of clusters 80 comprising at least one partial training time-series. The partial training time-series are excerpts of the training time-series of various lengths and starting times.

A cluster of the set of clusters 80 is associated with a cluster anomaly label 31. The cluster anomaly label 31 encodes whether the partial training time-series displays an anomalous behavior.

The clustering model takes as input a measurement time-series, which are then compared to the set of clusters. An anomaly label is computed based on the cluster anomaly label 31 of clusters of the set of clusters 80 which meet a proximity condition.

The set of clusters 80 may depend on training resource metadata 15 and the anomaly detection module 20 may rely on a plurality of clustering models, with one of a plurality of clustering models being associated with a group of network resources.

With reference to FIG. 3, the anomaly detection module 20 is described in greater detail.

The anomaly detection module 20 comprises a multi-label classification unit 210, a preliminary classification unit 220 and a false-positive pruning unit 230.

The measurement time-series may be processed in parallel. An input measurement time-series 140 is received by the multi-label classification unit 210. The multi-label classification unit 210 computes a subset 141 of the set of clusters 80 that satisfies a proximity condition.

The multi-label classification unit 210 computes a representation of the input measurement time-series 140, comprising the derived temporal attributes and a centroid of values of the input measurement time-series 140. According to an embodiment, the centroid is a value associated with a timestamp placed at half the sliding window. The centroid may also be any kind of average or weighted average or a median value. The centroid may also be a specific value, such as the first value or last value acquired during the sliding window.

The multi-label classification unit also computes centroids of values and derived temporal attributes within the clusters in the set of clusters 80. Centroids of the clusters are averages of the median values of the elements of the clusters, wherein the elements of the clusters are partial time-series.

A number of clusters is chosen based on a proximity criterion. According to an embodiment, the number of clusters is a hyperparameter $k$. The hyperparameter $k$ may be chosen using any method in the state of the art such as the elbow method or the silhouette method. The hyperparameter $k$ may also be chosen empirically, for example on the basis of geographic features or an area density. In the case of a deployment of the communications network resource in a rural setting, the hyperparameter $k$ may be very low (for example two or four). In the case of a deployment of the communications network resource in an urban area, there might be a high number of clusters, for example dozens.

According to another embodiment, the number of clusters may be variable and depend on an absolute proximity criterion.

An ensemble of clusters 141, which meet a distance condition with the input measurement time-series 140 is selected. The distance condition may consist in selecting the $k$ closest clusters in accordance with some metric. An algorithm such as the k-nearest neighbors algorithm can be used. A distance between the centroid of the input measurement time-series 140 and the centroids of the clusters can be computed as the metric.

A proximity of values is computed using a distance, for example the Euclidian distance or a Minkowski distance of order $p$, where $p$ is a chosen integer.

The $k$ closest clusters in the ensemble of clusters 141 are each associated with a cluster anomaly label 31, which may be a positive cluster anomaly label or a negative cluster anomaly label. The ensemble of clusters 141 and the cluster anomaly labels are transmitted to the preliminary classification unit 220.

The preliminary classification unit 220 computes a primary anomaly label 142 based on the ensemble of clusters 141 and the cluster anomaly labels associated with the clusters in the ensemble of clusters 141.

Decision weights are associated with the clusters in the ensemble of clusters 141, according for example to the following equation, where $z$ designates the centroid of the input measurement time-series 140, $C_i$ designates the $i$-th cluster and where $|C_i|$ designates a number of elements in the $i$-th cluster:

$$w_i = |C_i| * similarity(C_i, z)$$

The decision weights may be computed differently. According to an embodiment, the decision weights are the similarity between the clusters and the centroid of the input measurement time-series 140.

The similarity may be computed as follows, as a function of the distance:

$$similarity = 1 - distance$$

Thus, the decision weights are a function of the input measurement time-series 141 and are highest for large clusters with elements which are similar to the input measurement time-series 141.

A voting strategy is then implemented based on the decision weights and an aggregated abnormality score is computed. The voting strategy may rely on plurality voting, majority voting, dictatorship, or any voting strategy existing in the state of the art.

The voting strategy may depend on the decision weights. The clusters may be sorted by decreasing decision weights and the voting strategy may rely on a subset of the ensemble of clusters 141 with the highest decisions weights (for example, the primary anomaly label may be the same as the cluster anomaly label of the cluster with the highest decision weight). A weighted majority voting may take place.

The preliminary classification unit 220 outputs the primary anomaly label 142 associated with the input measurement time-series 140. The primary anomaly label 142 may be positive if the aggregated abnormality score exceeds an abnormality threshold (which can be fixed empirically). The primary anomaly label may also be positive depending on a result of the voting strategy

The primary anomaly label 142 is then transmitted to the false-positive pruning unit 230. Although the multi-label classification unit 210 and the preliminary classification unit 220 process measurement time-series relating to each key performance indicator and each resource group independently, the false-positive pruning unit 230 carries out a collaborative process across the measurement time-series associated with a plurality of key performance indicators of a communications network resource. The false-positive pruning unit 230 computes a secondary anomaly label 144 for the measurement time-series.

The false positive pruning unit 230 corrects erroneous labels by comparing the primary anomaly label 142 with other primary anomaly labels 143 relating to measurement time-series of other key performance indicators for the same communications network resource. An objective of this step is to correct primary anomaly labels which would be false positives.

According to an embodiment, a proportion of positive primary anomaly labels is computed. If the proportion of positive anomaly labels is below a false-positive threshold, the positive primary anomaly labels are deemed false positives. The false-positive pruning unit 230 may then output negative secondary anomaly labels 144.

The false-positive threshold may be fixed empirically and may be absolute or relative.

According to an embodiment, primary anomaly labels relating to correlated key performance indicators may also be analyzed. If a first key performance indicator and a second key performance indicator have a causality link, and the first key performance indicator is associated with a positive primary anomaly label and the second key performance indicator is associated with a negative primary anomaly label, the false-positive pruning unit associates a negative secondary anomaly label to the first key performance indicator.

According to an embodiment, the false-positive pruning module may also confirm a presence of an anomaly by checking measurement time-series of normally independent key performance indicators for new correlations.

With reference to FIG. 4, a model-building module 40 is represented. The model-building module 40 outputs the clustering model embedded within the anomaly detection module 20. The clustering model comprises a plurality of clusters of time-series 80, the clusters being associated with cluster anomaly labels 31.

The model-building module 40 comprises a resource-grouping unit 401, a contextual clustering unit 402 and a categorization unit 403.

The resource-grouping unit 401 takes as input the training resource metadata 15 associated with a plurality of training network resources. The resource-grouping unit 401 outputs a set of resource groups 17. A resource group of the set of resource groups 17 comprises at least one communications network resource. The at least one communications network resource satisfies a similarity criterion, wherein the similarity criterion depends on the training resource metadata 15 of the communications network resources in the resource group.

According to an embodiment, an exact metadata matching is employed. This may be the case if there is a relatively limited number of metadata variables and if the metadata variables are all categorical. In this embodiment, a resource group contains communications network resources with identical values of the metadata variables.

According to an embodiment, an exact metadata matching with priority may be applied. A limited set of categorical variables is chosen. The set of resource groups 17 are built so that a resource group contains communications network resources with identical values of the limited set of categorical variables, despite having possibly different values for different variables.

According to an embodiment, the set of resource groups 17 may be computed using a multiclass classification algorithm (such as, for example, Naive Bayes, Support Vector Machines, Random forest classifiers or the K-nearest neighbors) or clustering algorithms (such as k-Means or affinity propagation). The clustering algorithms may rely on a similarity metric, computed as a function of a chosen distance, such as the Euclidian distance or a Minkowski distance.

Hence, the set of resource groups 17 comprises resources having similar or identical metadata vectors.

The set of resource groups 17 is transmitted to the contextual clustering unit 402. The contextual clustering unit 402 also receives the training time series 16.

The training time-series 16 are a plurality of time-series extracted from the plurality of training network resources.

The contextual clustering unit 402 computes a clustering model for a resource group, as a function of a subset of the training time-series corresponding to said resource group. The contextual clustering unit 402 may comprise a plurality of clustering models corresponding to the plurality of key performance indicators. Hence, the training time-series 16 relate to one key performance indicator and to one resource group.

A plurality of clustering models may be computed sequentially or in parallel by the model-building module 40, for the plurality of resource groups and of key performance indicators.

The contextual clustering unit 402 splits the training time-series 16 into partial training time-series and clusters the partial training time-series into a set of clusters 80, wherein a cluster of the set of clusters is defined by the values of the partial training time-series but also the derived temporal attributes. The partial training time-series in one cluster all satisfy a similarity condition. Suitable similarity conditions are for example a maximal distance value, where a distance between partial training time-series can be computed as a Euclidian distance or a Minkowski distance.

The set of clusters 80 is then transmitted to the categorization module 403. The categorization module 403 outputs the cluster anomaly labels 31 associated with the set of clusters.

According to an embodiment, the cluster anomaly labels 31 may be computed based on an analysis of a size distribution of the clusters. A threshold may be fixed, so that below said threshold a cluster is considered anomalous and associated with a positive anomaly label.

The threshold may be an absolute size or a relative threshold compared to a size distribution. Indeed, small clusters may indicate outliers and therefore anomalies in a given network resource.

For example, a cluster of only one time-series indicates that there is a network resource with a behavior which differs from that of other network resources in the resource group, which would indicate an anomaly.

The model-building module 40 outputs clustering models used afterwards in the exploitation phase. However, the model-building module 40 may be further solicited afterwards to update the clustering models, in case of network changes, such as an integration of new communications network resources. The clustering models may be updated on a regular basis.

The clustering models may be updated automatically, for example when the anomaly detection module displays a drop in performance or fails to satisfy a chosen metric, which may be a success rate in reporting anomalies.

An update of the clustering models may also be automatically triggered when the new time-series measurements do not satisfy a similarity condition with the training time-series anymore. The similarity condition may be based on a similarity metric to compare time-series.

With reference to FIG. 5, the contextual clustering unit 402 is described in greater detail.

The contextual clustering unit 402 comprises a formatting module 4021, a row-clustering module 4022 and a resource-clustering module 4023. The contextual clustering module receives the training time series 16 relating to a key performance indicator and to a resource group.

The formatting module 4021 outputs tabular data 60, wherein a row corresponds to a timestamp. The row comprises the derived temporal attributes and values of the key performance indicator for the communications network resources in the resource group.

The row-clustering module 4022 then clusters rows with similar values together into a set of intermediate clusters 70. An intermediate cluster contains rows (consecutive or not) put together in the same table.

The set of intermediate clusters 70 is transmitted to the resource-clustering module 4023, wherein the training network resources are grouped together into the set of clusters 80 based on a similarity of the values within an intermediate cluster.

Thus, a cluster of the set of clusters 80 comprises extracts of time-series for a key performance indicator for a plurality of training network resources, wherein the extracts of time series satisfy a similarity condition.

With reference to FIG. 6, the anomaly detection module 20 may transmit anomalous time-series 30 associated with a positive anomaly label to a root-cause analysis module 24. The root-cause analysis module 24 is tasked with investigating a source of a prospective anomaly. The root-cause analysis module 24 may transmit a report to a corrective module 28. The corrective module 28 may perform an automated corrective action on a communication network resource in order to suppress the anomaly and ensure a normal behavior of the communications network resources.

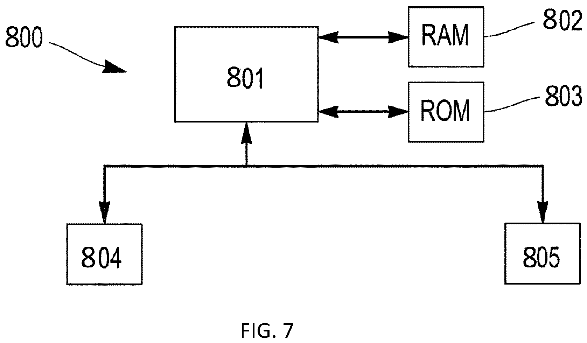

FIG. 7 shows a functional diagram of a programmed computer, server, circuitry, or apparatus 800 that may be used for implementing the above-described anomaly detection apparatus. Computer 800 has a core and several peripherals connected via a communication bus. The major components of the core are a microprocessor 801 (often called the CPU) random access memory (RAM) 802 and read only memory (ROM) 803. The peripherals comprise devices that allow information to be input to the system from users, output to users and stored and retrieved (mass storage devices 804 such as hard disks and network interfaces 805).

The invention is not limited to the described example embodiments. The appended claims are to be construed as embodying all modifications and alternative constructions that may occur to one skilled in the art, and which fairly fall within the basic teaching as set forth herein.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Elements such as the apparatus and its components could be or include e.g. hardware means like e.g. an Application-Specific Integrated Circuit (ASIC), or a combination of hardware and software means, e.g. an ASIC and a Field-Programmable Gate Array (FPGA), or at least one microprocessor and at least one memory with software modules located therein, e.g. a programmed computer.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The example embodiments may be implemented by means of hardware as well as software. The same item of hardware may represent several "means".

In the claims, any reference signs placed between parentheses shall not be construed as limiting the scope of the claims.

**Claims**

1. An apparatus for anomaly detection (20), the apparatus comprising means for:

   - Collecting a measurement time-series (11, 14, 140) relating to a performance indicator, wherein the measurement time-series relates to a communications network resource (10), wherein the measurement time-series is collected over a predetermined timeframe,
   - Computing a representative value of said measurement time-series (11, 14, 140),
   - Providing a clustering model comprising a set of clusters (80), wherein the clustering model has been trained on a plurality of training time-series (16) relating to the performance indicator, wherein the training time-series relate to a plurality of communications network resources, wherein a cluster of the set of clusters (80) comprises partial time-series that meet an internal similarity condition, wherein the partial time-series are portions of the training time-series (16), wherein a cluster anomaly label (31) is associated with said cluster, wherein the cluster anomaly label (31) encodes whether the cluster is anomalous,
   - Selecting a cluster subset (141) within the set of clusters (80), wherein the cluster subset is associated with the measurement time-series (11, 14, 140), wherein the cluster subset (141) comprises at least one cluster which meets an external similarity condition with the measurement time-series, wherein the external similarity condition is a function of a first distance between the partial time-series within the cluster and the representative value of the measurement time-series,
   - Computing a primary anomaly label (30, 142) associated with the measurement time-series (11, 14, 140), wherein the primary anomaly label is computed as a function of the cluster anomaly label (31) of the at least one cluster of the cluster subset (141) associated with the measurement time-series.

2. An apparatus (20) according to claim 1, further comprising means for:

   - Collecting a plurality of measurement time-series (11, 14) relating to a plurality of performance indicators, wherein the plurality of measurement time-series relates to the communications network resource (10), wherein the plurality of measurement time-series is collected over the predetermined timeframe,
   - Computing a respective representative value associated with each of said measurement time-series (11, 14),
   - Selecting within the set of clusters (80) a cluster subset (141) associated with each of said measurement time-series, wherein the cluster subset comprises at least one cluster for which the partial time-series within the cluster meet a distance condition with the representative value associated with the measurement time-series (11, 14),
   - Computing a primary anomaly label (30, 142) associated with each of said measurement time-series (11, 14), wherein the primary anomaly label is computed as a function of the cluster anomaly label (31) of the at least one cluster of the cluster subset (141) associated with the measurement time-series,
   - Computing a secondary anomaly label (144) associated with at least one of the plurality of measurement time-series (11, 14), wherein the secondary anomaly label (144) is computed as a function of the primary anomaly labels (143) associated with the plurality of measurement time series (11, 14).

3. An apparatus (20) according to claim 1 or 2, further comprising means for:

   - Computing a decision weight associated to each of the at least one cluster of the cluster subset (141) associated with the measurement time-series (11, 14, 140), wherein the decision weight depends on a similarity parameter representing similarity between the representative vector associated with the measurement time-series (11, 14, 140) and the at least one cluster of the cluster subset (141), and on a size of the at least one cluster, wherein the size of the cluster is a number of partial time-series in the cluster,
- Computing the primary anomaly label (142) as a function of the decision weight and the cluster anomaly label (31) of the at least one cluster of the cluster subset (141) associated with the measurement time-series (11, 14, 140).

4. An apparatus (20) according to any one of claims 1 to 3, further comprising means for transmitting the primary anomaly label (142) to a correction module (24), wherein the correction module performs root cause analysis and at least one corrective action relating to the communications network resource.

5. An apparatus (20) according to any one of claims 1 to 4, wherein a temporal attribute is associated with said or each of said measurement time-series (11, 14, 140), wherein each cluster comprises a cluster temporal attribute, and wherein the external similarity condition is a function of a second distance between the cluster temporal attribute and the temporal attribute associated with the measurement time-series (11, 14, 140).

6. An apparatus (20) according to any one of claims 1 to 5, wherein the representative value is a median value of said or each of said measurement time-series (11, 14, 140).

7. An apparatus (20) according to any one of claims 1 to 6, further comprising means for:

- Collecting a plurality of measurement time-series (11, 14, 140) relating to a plurality of communications network resources (10) and feature vectors associated with the plurality of communications network resources, wherein the feature vectors encode physical features of the plurality of communications network resources (10),
- Selecting a time-series subset within the plurality of measurement time-series as a function of the feature vectors, wherein the feature vectors associated to the measurement time-series within the time-series subset meet a similarity criterion,
- Computing representative values associated with each measurement time-series of the time-series subset,
- Selecting within the set of clusters (80) a cluster subset associated with each measurement time-series of the time-series subset, wherein the cluster subset comprises at least one cluster which meets the external similarity condition with the measurement time-series,
- Computing a primary anomaly label (30, 142) associated with each measurement time-series (11, 14, 140) of the time-series subset, wherein the primary anomaly label is computed as a function of the cluster anomaly label (31) of the at least one cluster of the cluster subset associated with the measurement time-series,
- Computing a secondary anomaly label (144) associated with at least one measurement time-series (11, 14) of the time-series subset, wherein the secondary anomaly label (144) is computed as a function of the primary anomaly labels (143) associated with the measurement time series (11, 14) of the time-series subset.

8. An apparatus (20) according to claim 7, wherein said similarity criterion consists in that the feature vectors associated to the measurement time-series (11, 14, 140) within the time-series subset are identical.

9. An apparatus (20) according to claim 7 or 8, wherein the means for providing a clustering model are configured for:

- Providing a training array comprising the plurality of training time-series (16) within the time-series subset as columns of the training array and simultaneous values of the training time-series within the time-series subset as lines of the training array, wherein a timestamp is associated to each line of the training array,
- Clustering the lines of the training array into at least one subarray, wherein the subarray comprises lines of the training array which meet a first vector similarity condition, wherein the subarray comprises a partial column corresponding to each column of the training array,
- Clustering the partial columns of the subarray into said set of clusters (80), wherein each cluster of the set of clusters comprises partial columns of the subarray that meet a second vector similarity condition,
- Associating the cluster anomaly labels (31) with the set of clusters (80).

10. An apparatus (20) according to any one of claims 1 to 9, further comprising means for setting the cluster anomaly label (31) associated with a cluster to encode an anomalous cluster in response to determining that a size of the cluster is lower than a threshold of size.

11. An apparatus (20) according to claim 10, further comprising means for setting the threshold of size as a function of a size distribution of the set of clusters (80).

12. A method for anomaly detection, the method comprising the steps of:

- Collecting a measurement time-series (11, 14, 140) relating to a performance indicator, wherein the measurement time-series relates to a communications network resource (10), wherein the measurement time-series is collected over a predetermined timeframe,

- Computing a representative value of said measurement time-series (11, 14, 140),

- Providing a clustering model comprising a set of clusters (80), wherein the clustering model has been trained on a plurality of training time-series (16) relating to the performance indicator, wherein the training time-series relate to a plurality of communications network resources, wherein a cluster of the set of clusters (80) comprises partial time-series that meet an internal similarity condition, wherein the partial time-series are portions of the training time-series (16), wherein a cluster anomaly label (31) is associated with said cluster, wherein the cluster anomaly label (31) encodes whether the cluster is anomalous,

- Selecting a cluster subset (141) within the set of clusters (80), wherein the cluster subset is associated with the measurement time-series (11, 14, 140), wherein the cluster subset (141) comprises at least one cluster which meets an external similarity condition with the measurement time-series, wherein the external similarity condition is a function of a first distance between the partial time-series within the cluster and the representative value of the measurement time-series,

- Computing a primary anomaly label (30, 142) associated with the measurement time-series (11, 14, 140), wherein the primary anomaly label is computed as a function of the cluster anomaly label (31) of the at least one cluster of the cluster subset (141) associated with the measurement time-series.

13. A method according to claim 12, the method comprising the steps of:

- Collecting a plurality of measurement time-series (11, 14) relating to a plurality of performance indicators, wherein the plurality of measurement time-series relates to the communications network resource (10), wherein the plurality of measurement time-series is collected over the predetermined timeframe,

- Computing a respective representative value associated with each of said measurement time-series (11, 14),

- Selecting within the set of clusters (80) a cluster subset (141) associated with each of said measurement time-series, wherein the cluster subset comprises at least one cluster for which the partial time-series within the cluster meet a distance condition with the representative value associated with the measurement time-series (11, 14),

- Computing a primary anomaly label (30, 142) associated with each of said measurement time-series (11, 14), wherein the primary anomaly label is computed as a function of the cluster anomaly label (31) of the at least one cluster of the cluster subset (141) associated with the measurement time-series,

- Computing a secondary anomaly label (144) associated with at least one of the plurality of measurement time-series (11, 14), wherein the secondary anomaly label (144) is computed as a function of the primary anomaly labels (143) associated with the plurality of measurement time series (11, 14).

14. A method according to claim 12 or 13, further comprising the steps of:

- Computing a decision weight associated to each of the at least one cluster of the cluster subset (141) associated with the measurement time-series (11, 14, 140), wherein the decision weight depends on a similarity parameter representing similarity between the representative vector associated with the measurement time-series (11, 14, 140) and the at least one cluster of the cluster subset (141), and on a size of the at least one cluster, wherein the size of the cluster is a number of partial time-series in the cluster,

- Computing the primary anomaly label (142) as a function of the decision weight and the cluster anomaly label (31) of the at least one cluster of the cluster subset (141) associated with the measurement time-series (11, 14, 140).

15. A method according to any one of claims 12 to 14, further comprising the steps of:

- Collecting a plurality of measurement time-series (11, 14, 140) relating to a plurality of communications network resources (10) and feature vectors associated with the plurality of communications network resources, wherein the feature vectors encode physical features of the plurality of communications network resources (10),

- Selecting a time-series subset within the plurality of measurement time-series as a function of the feature vectors, wherein the feature vectors associated to the measurement time-series within the time-series subset meet a similarity criterion,

- Computing representative values associated with each measurement time-series of the time-series subset,

- Selecting within the set of clusters (80) a cluster subset associated with each measurement time-series of the time-series subset, wherein the cluster subset comprises at least one cluster which meets the external similarity condition with the measurement time-series,

- Computing a primary anomaly label (30, 142) associated with each measurement time-series (11, 14, 140) of the time-series subset, wherein the primary anomaly label is computed as a function of the cluster anomaly label (31) of the at least one cluster of the cluster subset associated with the measurement time-series,

- Computing a secondary anomaly label (144) associated with at least one measurement time-series (11, 14) of the time-series subset, wherein the secondary anomaly label (144) is computed as a function of the primary anomaly labels (143) associated with the measurement time series (11, 14) of the time-series subset.

$10_1$

$11_1$

$10_2$

12

$11_2$

$10_j$

$11_j$

FIG. 1

12

13

20

30

14

FIG. 2

FIG. 3

FIG. 4

16    60    70

4021    4022    4023    80

402

FIG. 5

20    30    24    35    28

12

FIG. 6

800

801

RAM 802

ROM 803

804

805

FIG. 7

Europäisches
Patentamt

European
Patent Office

Office européen
des brevets

**EUROPEAN SEARCH REPORT**

Application Number

EP 22 20 6456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/150103 A1 (UMAKANTH ADITHYA [IN] ET AL) 12 May 2022 (2022-05-12)<br>* paragraph [0032] – paragraph [0045] *<br>* paragraph [0056] – paragraph [0068] *<br>* paragraph [0075] – paragraph [0082] *<br>* paragraph [0088] – paragraph [0090] *<br>* figures 1, 3, 5, 6, 9, 10 *<br>————— | 1–15 | INV.<br>H04L41/0631<br>H04L41/14<br>H04L41/16 |
| Y | US 10 039 016 B1 (LARISH BRYAN CHRISTOPHER [US] ET AL) 31 July 2018 (2018-07-31)<br>* column 2, line 4 – column 3, line 41 *<br>* column 6, line 36 – column 6, line 51 *<br>* column 9, line 12 – column 9, line 35 *<br>* figures 1B, 4, 7 *<br>————— | 1–15 | |

TECHNICAL FIELDS
SEARCHED        (IPC)

H04L

The present search report has been drawn up for all claims

| Place of search | Date of completion of the search | Examiner |
|---|---|---|
| Munich | 24 April 2023 | Koch, György |

EPO FORM 1503 03.82 (P04C01)

## ANNEX TO THE EUROPEAN SEARCH REPORT
## ON EUROPEAN PATENT APPLICATION NO.

EP 22 20 6456

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2023

| Patent document cited in search report | Publication date | Patent family member(s) | Publication date |
|---|---|---|---|
| US 2022150103 A1 | 12-05-2022 | US 2022038332 A1<br>US 2022150103 A1 | 03-02-2022<br>12-05-2022 |
| US 10039016 B1 | 31-07-2018 | NONE | |

EPO FORM P0459

For more details about this annex : see Official Journal of the European Patent Office, No. 12/82